# EUROPÄISCHE PATENTSCHRIFT

(11) **EP 0 891 892 B1**
(45) Veröffentlichungstag und Bekanntmachung des Hinweises auf die Patenterteilung: **09.10.2002**
(21) Anmeldenummer: 98112437.3
(22) Anmeldetag: 04.07.1998
(51) Int. Cl.: B60R 13/02, B29C 49/00, B60J 5/00

(54) **Aus thermoplastischem Kunststoff im Blasverfahren hergestellte Türverkleidung für Kraftfahrzeuge**
Blow molded thermoplastic door trim panel for motor vehicle
Panneau de garniture en matière thermoplastique pour porte de véhicule automobile obtenu par moulage par soufflage

(30) Priorität: 15.07.1997 DE 19730241
(43) Veröffentlichungstag der Anmeldung: 20.01.1999
(73) Patentinhaber: Kautex Textron GmbH & Co. KG., 53229 Bonn (DE)
(72) Erfinder: Moitzheim, Jürgen, 53639 Königswinter (DE); Weber, Wolfgang, 53229 Bonn (DE)
(74) Vertreter: Kierdorf, Theodor, Dipl.-Ing.

(56) Entgegenhaltungen:
- EP-A- 0 142 435
- EP-A- 0 363 744
- FR-A- 2 695 877
- US-A- 4 762 379

## Beschreibung

Die Erfindung betrifft eine Türverkleidung mit den Merkmalen des Oberbegriffs von Anspruch 1.

Derartige Türverkleidungen sind bereits bekannt, wobei sie jedoch nur wenige zusätzliche Funktionen übernehmen oder aber mehrteilig und relative kompliziert ausgebildet sind, so dass wesentliche dem Blasformverfahren innewohnende Vorteile nicht genutzt werden.

Eine Türverkleidung gemäß Oberbegriff von Anspruch 1 ist beispielsweise aus der EP 0 142 435 bekannt. Die dort beschriebene Türverkleidung wurde bereits bei der Herstellung mit angeformten Eindrückungen und Vertiefungen sowie Vorsprüngen zur Bildung von Ablage sowie beispielsweise zur Aufnahme eines Türschlosses hergestellt.

Die Eigensteifigkeit der Verkleidung wird durch seitlich in diese eingesetzte Verstärkungsprofile erzielt.

Aus der US-PS 4,762,379 ist eine aus thermoplastischem Kunststoff geblasene Türverkleidung bekannt, die ebenfalls angeformte Eindrückungen und Vertiefungen aufweist, die durch Pressformen mittels entsprechend ausgebildeter Schieber in der Blasform hergestellt wurden.

Der Erfindung liegt die Aufgabe zugrunde, eine Türverkleidung der eingangs genannten Art für Kraftfahrzeuge zu schaffen, die eine möglichst kostengünstige Komplettierung der Tür ermöglicht.

Die Türverkleidung soll auf einfache Weise herstellbar und insbesondere auch derart handhabbar sein, dass sie das Anbringen von innenseitig im Türbereich erforderlicher Funktionselemente erleichtert und vereinfacht.

Diese Aufgabe wird mit den im Kennzeichen des Anspruchs 1 angegebenen Markmalen gelöst.

Die Erfindung lässt sich dahingehend zusammenfassen, dass zumindest einige der im Türbereich erforderlichen und unabhängig von der Türverkleidung hergestellten Funktionsteile vor dem Einsetzen der Türverkleidung an letzterer angebracht und dann praktisch in einem Arbeitsgang gleichzeitig mit dem Einfügen der Türverkleidung in der Tür in ihre jeweilige Funktionsposition gebracht werden. Im Wesentlichen geht es somit darum, zumindest einen wesentlichen Teil der dem Türbereich zugeordneten Funktionsteile vor der Montage der Türverkleidung an letzterer anzubringen, um im Ergebnis eine aus mehreren Teilen bestehende Montageeinheit in der Tür einzusetzen und so das zeitaufwendige nachträgliche Montieren oder Zusammensetzen mehrerer Teile zu vermeiden.

An der Türverkleidung angebrachte Leitungen, die zur Versorgung, Betätigung, Steuerung oder dgl. dienen, sind an ihren dem jeweiligen Funktionselement abgekehrten Ende mit einem Kupplungsteil versehen, das mit einem komplementären, an der Tür angebrachten Kupplungsteil beim Einsetzen der Türverkleidung beispielsweise nach Art einer Steckverbindung in Eingriff gebracht wird. Bei definierter Anordnung der beiden Kupplungsteile ist es ohne weiteres möglich, diese mit dem Einfügen der Türverkleidung miteinander zu verbinden, zumal die Position des die Türverkleidung bildenden Hohlkörpers in der Tür beispielsweise durch einen Sitz oder sonstige Führungs- oder Halteeinrichtungen genau festgelegt ist.

Dabei ist es beispielsweise im Fall von elektrischen Leitungen zudem möglich, mehrere Leitungen nach Art eines Kabelbaums zu einem Strang zusammenzufassen und sämtliche Leitungen dieses Stranges ein entsprechend ausgestaltetes, gemeinsames Kupplungsteil zuzuordnen, welches mit einem komplementären Kupplungsteil in der Tür zum gleichzeitigen Herstellen mehrerer Verbindungen zusammengesteckt wird.

Es ist ferner möglich, beim Herstellen des die Türverkleidung bildenden Hohlkörpers an diesem Einlegeteile anzubringen, z. B. Schraubenmuttern, Bolzen, Dübel und/oder ggf. auch die vorerwähnten Kupplungsteile für Leitungen. Diese Einlegeteile werden beim Herstellen des Hohlkörpers in der Blasform eingelegt, so dass sie beim Aufweiten des im allgemeinen schlauchförmigen Vorformlings zu dem die Türverkleidung bildenden Hohlkörper in den Kunststoff eingebettet und von diesem gehalten werden. Die Verwendung derartiger Einlegeteile ist in der Blasformtechnik allgemein bekannt, wie sich beispielsweise aus DE-29 24 198 C2 ergibt.

Darüberhinaus besteht die Möglichkeit, den die Türverkleidung bildenden Hohlkörper zumindest teilweise auszuschäumen, um so einen zusätzlichen Seitenschutz für den Innenraum zu erreichen. Dieses Ausschäumen erfolgt im allgemeinen nach dem Blasformen des Hohlkörpers. Ferner können an der dem Innenraum des Kraftfahrzeuges zugekehrten Seite irgendwelche dekorativen Elemente vorhanden sein, die z. B. an die Farbe oder das Dekor der übrigen den Innenraum begrenzenden Wandteile angepaßt sind und ebenfalls nach dem Blasformen der Türverkleidung, jedoch vor dem Einsetzen derselben in der Tür, angebracht werden können, so daß auch hier ein gesondertes Anbringen nach dem Einsetzen der Türverkleidung nicht erforderlich ist.

In der Zeichnung ist ein Ausführungsbeispiel der Erfindung dargestellt. Es zeigen:

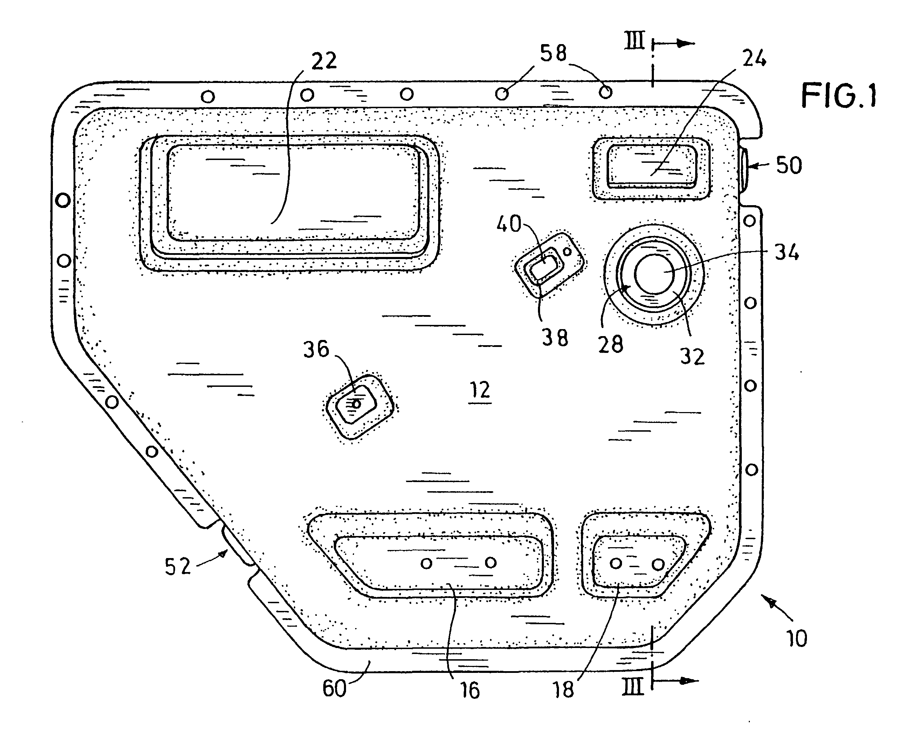

- Fig. 1: die Ansicht auf die dem Innenraum zugekehrte Seite eines Hohlkörpers für die Türinnenverkleidung,

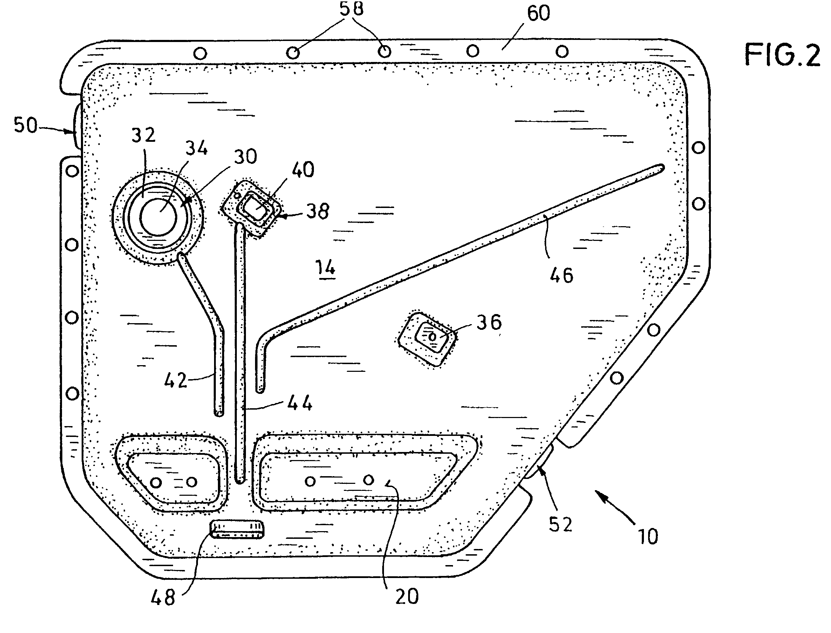

- Fig. 2: eine der Fig. 1 entsprechende Ansicht auf die dem Innenraum abgekehrte Seite dieses Hohlkörpers,
- Fig. 3: einen Schnitt nach der Linie III-III der Fig. 1.

Der Hohlkörper 10 der Türinnenverkleidung wird aus thermoplastischem Kunststoff, beispielsweise Polypropylen oder ABS, im Blasverfahren im allgemeinen ausgehend von einem schlauchförmigen Vorformling hergestellt. Die Zeichnung läßt erkennen, daß die einander gegenüberliegenden Wandungen 12 und 14 des verhältnismäßig flachen Hohlkörpers 10 mit Vertiefungen bildenden Eindrückungen versehen sind, von denen die einseitigen Eindrückungen 16 und 18 im unteren Bereich der Wandverkleidung beispielsweise als Ablage für irgendwelche Teile dienen. Dabei ist die Anordnung so getroffen, daß der die beiden Ablagen 16, 18 jeweils im Tiefsten derselben begrenzende Wandbereich 20, der durch Gegeneinanderdrücken und Zusammenschweißen der beiden gegenüberliegenden Bereiche der Wandungen 12 und 14, also durch Preßformen, gebildet wird, außerhalb der Querschnittskontur der übrigen Bereiche des Hohlkörpers 10 liegt. Die durch die Eindrückungen 22 und 24 im oberen Bereich der Wandverkleidung gebildeten Vertiefungen dienen zur Aufnahme eines Seiten-Airbags bzw. der Bildung einer Luftdüse, durch die Luft in das Innere des Kraftfahrzeuges strömen kann. Auch hier befindet sich in beiden Fällen die Begrenzungswand 26 des jeweiligen Tiefsten der Eindrückung 22 bzw. 24 an der dem Passagierraum abgekehrten Seite des Hohlkörpers 10, ohne jedoch über dessen Querschnittskontur vorzustehen.

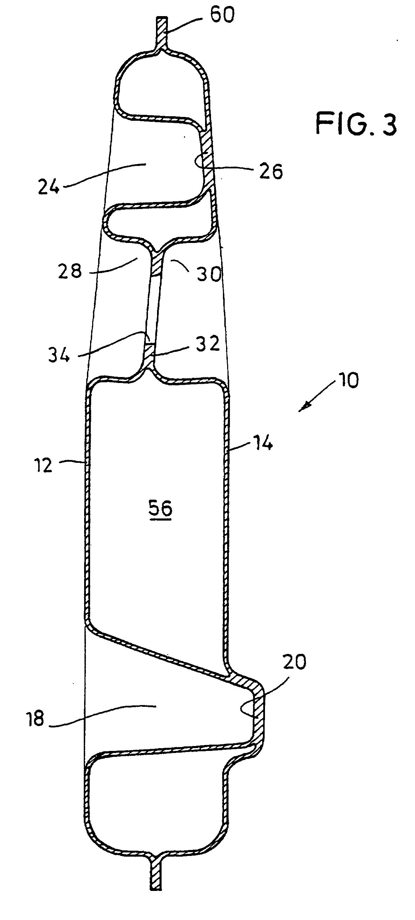

Unterhalb der einseitigen Eindrückung 24 befinden sich zwei einander gegenüberliegende Eindrückungen 28, 30, die durch eine preßgeformte Wandung 32 voneinander getrennt sind, die mit einem Loch 34 versehen ist, welches nachträglich angebracht worden sein kann. In das Loch 34 kann z. B. ein Lautsprecher eingesteckt werden, der rückseitig, also an der dem Innenraum abgekehrten Seite, an ein Empfangsgerät od. dgl., beispielsweise ein Radio, anzuschließen ist. Da die die beiden Vertiefungen 28, 30 begrenzende gemeinsame Wandung 32 zwischen den beiden den Hohlkörper begrenzenden Wandungen 12, 14 liegt, kann der Lautsprecher ohne weiteres so angeordnet werden, daß er gegenüber der sich aus Fig. 3 ergebenden Querschnittskontur des Hohlkörpers 10 nicht oder nur wenig vorsteht.

Ferner ist der Hohlkörper 10 mit zwei weiteren durch Preßformen hergestellten Wandbereichen 36, 38 versehen, die jeweils die Begrenzung von zwei einander gegenüberliegenden Eindrükkungen darstellen und somit ebenfalls zwischen den beiden Begrenzungswänden 12 und 14 liegen. Diese Wandbereiche 36, 38 bewirken - wie auch die in gleicher Weise hergestellten Wandbereiche 20, 26 und 32 - auch eine zusätzliche Versteifung des Hohlkörpers 10 und damit der Türverkleidung. Sie dienen der Anbringung eines Handgriffes, an dem auch ein Hebel für die Betätigung des Türschlosses angebracht ist. Für die Durchführung der notwendigen Übertragungsmittel, beispielsweise eines Bowdenzuges, ist der Wandbereich 38 mit einem Loch 40 versehen.

Die preßgeformten Wandteile bewirken nicht nur eine Versteifung des Hohlkörpers 10 in seiner Gesamtheit. Vielmehr stellen sie aufgrund ihrer verhältnismäßig kleinen flächigen Erstreckung und der jeweils an sie anschließenden Gestaltung der Hohlkörperwandung verhältnismäßig formsteife Bereiche des Hohlkörpers 10 dar, die ohne weiteres in der Lage sind, Funktionselemente zu tragen, ohne daß sie eine unzulässige Verformung erführen oder durch die Fahrbewegung verursachte Erschütterungen irgendwelche störenden oder sonstwie nachteiligen Vibrationen oder dgl. Bewegungen auf das Funktionselement übertrügen.

Weiterhin ist der Hohlkörper 10 an seiner dem Innenraum des Kraftfahrzeuges abgekehrten Seite mit langgestreckten rinnenförmigen Vertiefungen 42, 44, 46 versehen, die ebenfalls beim Blasformen des Hohlkörpers an diesem angeformt worden sind. Diese Vertiefungen dienen der Aufnahme und Führung von Kabeln oder Drähten, von denen eines über die Vertiefung 42 die Verbindung zu dem in der Eindrückung 34 angeordneten Lautsprecher, ein anderes, in der Vertiefung 44 angeordnetes Kabel die Verbindung zu einem Fensterheber bzw. dessen Antrieb und ein drittes über die Vertiefung 46 die Verbindung zu einem an der Tür angebrachte Sensor herstellt, über welchen abgefragt wird, ob die jeweilige Tür offen oder geschlossen ist.

Die drei in den rinnenförmigen Vertiefungen 42, 44, 46 verlegten Kabel werden in dem Bereich zwischen den beiden Einwirkungen 16 und 18, die auf der dem Innenraum abgekehrten Seite des Hohlkörpers 10 als Vorsprünge erscheinen, in gebündelter Form hindurchgeführt und an ein gemeinsames Kupplungsteil angeschlossen, für das zwecks genauer Positionierung und formschlüssiger Halterung in der Wandung 14 ein Sitz 48 eingeformt ist, dessen Kontur den Querschnittsabmessungen des Kupplungsteiles entspricht, so daß dieses in jedem Fall eine definierte Position einnimmt. Dies gibt die Möglichkeit, beim Einsetzen der Türverkleidung, die mit den daran vorher angebrachten Funktionsteilen eine Montageeinheit darstellt, ohne weitere Vorkehrungen über ein entsprechendes an der Tür angebrachtes Kupplungsteil eine leitende Verbindung zwischen dem jeweiligen Funktionsteil, also beispielsweise dem Lautsprecher, und dem Gerät oder der Spannungsquelle, also dem Radioempfänger, herzustellen, dem das jeweilige Funktionsteil zugeordnet ist.

Bei dem in der Zeichnung dargestellten Ausführungsbeispiel ist der Hohlkörper 10 an seinen stirnseitigen Begrenzungen mit zwei Öffnungen 50 bzw. 52 versehen, durch die der vom Hohlkörper eingeschlossene Raum 56 mit außerhalb des Hohlkörpers 10 befindlichen Zu- bzw. Ableitungen verbunden werden kann. Die Anordnung ist dabei so getroffen, daß die Öffnung 50 bei geschlossener Tür einer in der vorn befindlichen Säule, der sogenannten A-Säule, die einen Teil des Türrahmens bildet, angeordneten Mündung einer Zuleitung für Luft gegenüberliegt, während die Öffnung 52 eine in der hinteren, der sogenannten B-Säule des Rahmens angeordneten Öffnung gegenüberliegt, die eine Verbindung zur hinteren Tür bzw. zur hinteren Wandung des Kraftfahrzeuges herstellt. Bei geschlossenen Türen entsteht so ein Leitungssystem für die Durchführung von ggf. durch die Kühleinrichtung des Motors erwärmter oder sonstwie klimatisierter Luft, wobei der Hohlkörper einen Teil dieses Leitungssystems darstellt, ohne daß dazu besondere Vorkehrungen zu treffen wären, da die Öffnungen 50, 52 bzw. die sie tragenden kurzen Stutzenteile ebenfalls beim Herstellen des Hohlkörpers 10 im Blasverfahren in einem Arbeitsgang angeformt werden können. Bei dem in der Zeichnung dargestellten Ausführungsbeispiel stellt der gesamte Innenraum des Hohlkörpers 10 einen Teil des Leitungssystems dar.

Es ist natürlich möglich, abweichend von der Darstellung in der Zeichnung den Innenraum des Hohlkörpers 10 teilweise mit Schaumstoff auszufüllen, wobei das Ausschäumen ohne Schwierigkeiten so durchgeführt werden kann, daß wenigstens ein Kanal für den Durchgang der Luft innerhalb der Schaummasse offen bleibt.

Ferner ist es möglich, dem Hohlkörper 10 an seiner dem Innenraum zugekehrten Seite durch Anbringen von Dekormaterialien, z. B. einer Folie oder Textilmaterialien ein gefälligeres Aussehen zu geben. Dies kann ebenfalls vor dem Einsetzen des Hohlkörpers 10 in der Tür geschehen. Die Funktion des Hohlkörpers 10 als Montageeinheit ist dadurch nicht beeinträchtigt, da die von der Innenseite zugänglichen Funktionsteile, wie z. B. Airbag und Lautsprecher, ohnehin in Vertiefungen untergebracht sind und die meisten anderen Funktionsteile auf der Rückseite des Hohlkörpers angeordnet und daran befestigt sind.

Die Befestigung des Hohlkörpers 10 an der Tür kann über geeignete und übliche Befestigungsmittel, die mit Löchern 58 im Rand 60 des Hohlkörpers zusammenwirken, erfolgen. Letzterer wird ebenfalls durch Preßformen in einem Arbeitsgang beim Schließen der Blasform am Hohlkörper angeformt. Es besteht aber auch die Möglichkeit, den Hohlkörper mit Einlegeteilen zu versehen, die als Kupplungsteile ausgebildet sind und mit komplementären Teilen, die von der Tür getragen werden, zusammenwirken derart, daß beim Einfügen des Hohlkörpers in die Tür analog den Kupplungsteilen für die elektrischen Verbindungsleitungen eine Steckverbindung entsteht, deren Wirksamwerden und -bleiben keine zusätzlichen Maßnahmen erfordert.

Bei der vorstehend beschriebenen und in der Zeichnung dargestellten Türverkleidung handelt es sich lediglich um ein Ausführungsbeispiel. Selbstverständlich können die Eindrückungen, Sitze, Ablagen usw. auch anders ausgebildet und angeordnet sein. Die durch die Anwendung des Blasverfahrens mögliche freie Gestaltbarkeit des Hohlkörpers ermöglicht es, die Türverkleidung gemäß der Erfindung an praktisch alle Erfordernisse, die sich aus dem Design und den technischen Gegebenheiten ergeben, anzupassen.

## Patentansprüche

1. Aus thermoplastischem Kunststoff im Blasverfahren hergestellte Türverkleidung für Kraftfahrzeuge, die als einstückiger blasgeformter Hohlkörper (10) ausgebildet ist, der mit angeformten Eindrückungen (16, 18, 22, 24, 28, 30, 42, 44, 46), Vertiefungen und Vorsprüngen zum Bilden von Sitzen, Konturen, Ablagen oder dgl. versehen ist, **dadurch gekennzeichnet, dass** wenigstens ein Teil der diese Eindrückungen begrenzenden Wandungen (20, 26, 32, 36, 38) durch Pressformen gebildet ist, dass der Hohlkörper vor dem Anbringen an der Tür mit wenigstens einem Teil der im Türbereich erforderlichen Funktionsteile versehen ist, dass die an ihrer dem Innenraum des Kraftfahrzeugs abgekehrte Seite mit rillenartigen Vertiefungen (42, 44, 46) für die Aufnahme von elektrischen und anderen Leitungen versehen ist, die an einem Ende jeweils mit wenigstens einem an der Verkleidung angebrachten Funktionselement verbunden und am anderen Ende mit einem Kupplungsteil verbunden sind, welches derart an der Türverkleidung angebracht ist, dass es eine definierte Position einnimmt und dass die aus Hohlkörpern und Funktionsteilen sowie gegebenenfalls weiteren Elementen bestehende resultierende Montageeinheit in ihrer Gesamtheit an der Tür angebracht wird.

2. Türverkleidung nach Anspruch 1, **dadurch gekennzeichnet, dass** die dem jeweiligen Funktionselement abgekehrten Endabschnitte von wenigstens zwei Leitungen zu einem Leitungsstrang zusammengefasst und die freien Enden wenigstens eines Teils dieser Leitungen mit einem gemeinsamen Kupplungsteil verbunden sind.

3. Türverkleidung nach Anspruch 1 oder 2, **dadurch gekennzeichnet, dass** das an der Türverkleidung angebrachte Kupplungsteil beim Anbringen der Türverkleidung an der Tür mit einem an letzterer angebrachten komplementären Kupplungsteil eine Steckverbindung eingeht.

4. Türverkleidung nach Anspruch 2, **dadurch gekennzeichnet, dass** sie an der dem Innenraum abgekehrten Seite mit wenigstens einem Sitz (48) für ein Kupplungsteil für wenigstens eine elektrische Leitung versehen ist.

5. Türverkleidung nach Anspruch 1, **dadurch gekennzeichnet, dass** sie mit Einlegeteilen versehen ist, die als Funktionsteile ausgebildet sind und/oder zur Befestigung von Funktionsteilen und/oder zum Befestigen der Bekleidung an der Tür dienen.

6. Türverkleidung nach Anspruch 1, **dadurch gekennzeichnet, dass** innerhalb derselben ein Luftführungskanal (50, 52) angeordnet ist, der von der vorderen Begrenzung des Tür aufnehmenden Rahmens bis zu deren hinteren Begrenzung geführt ist und Teil eines vom vorderen Rahmenteil zum hinteren Rahmenteil zu führenden Kanalsystem bildet.

7. Türverkleidung nach Anspruch 1, **dadurch gekennzeichnet, dass** wenigstens ein Teil des Innenraums derselben mit Schaumstoff ausgefüllt ist.

8. Türverkleidung nach Anspruch 1, **dadurch gekennzeichnet, dass** die pressgeformten Wandteile (32, 36, 38) der Eindrückungen sich in einem Bereich zwischen den beiden einander gegenüberliegenden Außenwandungen (12, 14) des Hohlkörpers befinden.

9. Türverkleidung nach Anspruch 7, **dadurch gekennzeichnet, dass** die pressgeformten Wandteile (32, 36, 38) innerhalb der Kontur verlaufen, die durch die mittels Blasen geformten Außenwandteile (12, 14) bestimmt ist.

10. Türverkleidung nach Anspruch 1, **dadurch gekennzeichnet, dass** sie mit dekorativen Elementen versehen ist, die nachträglich angebracht sein können.

## Claims

1. A door trim panel for motor vehicles, which is produced from thermoplastic material by a blow moulding process and which is in the form of a one-piece blow-moulded hollow body (10) provided with shaped impressions (16, 18, 22, 24, 28, 30, 42, 44, 46), recesses and projections for forming seats, contours, storage means or the like, **characterised in that** at least a portion of the walls (20, 26, 32, 36, 38) delimiting said impressions is formed by compression moulding, that the hollow body before being mounted to the door is provided with at least a part of the functional parts required in the door region, that at its side remote from the interior of the motor vehicle it is provided with grove-like recesses (42, 44, 46) for receiving electrical and other lines which at one end are respectively connected to at least one functional element mounted to the trim panel and are connected at the other end to a coupling portion mounted to the door trim panel in such a way that it assumes a defined position and that the resulting assembly unit comprising hollow bodies and functional parts and possibly further elements is mounted in its entirety to the door.

2. A door trim panel according to claim 1 **characterised in that** the end portions of at least two lines, which are remote from the respective functional element, are combined together to form a line strand and the free ends of at least a part of said lines are connected to a common coupling portion.

3. A door trim panel according to claim 1 or claim 2 **characterised in that** the coupling portion mounted to the door trim panel, when the door trim panel is mounted to the door, involves a plug connection to a complementary coupling portion mounted to the door.

4. A door trim panel according to claim 2 **characterised in that** at the side remote from the interior it is provided with at least one seat (48) for a coupling portion for at least one electrical line.

5. A door trim panel according to claim 1 **characterised in that** it is provided with insert portions which are in the form of functional portions and/or serve for fixing functional portions and/or for fixing the trim to the door.

6. A door trim panel according to claim 1 **characterised in that** arranged within same is an air guide duct (50, 52) which is taken from the front boundary of the door-receiving frame to the rear boundary of the door and forms a part of a duct system leading from the front frame portion to the rear frame portion.

7. A door trim panel according to claim 1 **characterised in that** at least a part of the interior thereof is filled with foam material.

8. A door trim panel according to claim 1 **characterised in that** the compression-moulded wall portions (32, 36, 38) of the impressions are disposed in a region between the two mutually opposite outside walls (12, 14) of the hollow body.

9. A door trim panel according to claim 7 **characterised in that** the compression-moulded wall portions (32, 36, 38) extend within the contour which is determined by the outside wall portions (12, 14) formed by means of blowing.

10. A door trim panel according to claim 1 **characterised in that** it is provided with decorative elements which can be subsequently fitted.

## Revendications

1. Panneau de garniture en matière plastique pour porte de véhicule automobile obtenu par moulage au soufflage, conçu comme corps creux (10) moulé par soufflage en une seule pièce, muni de renfoncements formés (16, 18, 22, 24, 28, 30, 42, 44, 46), d'évidements et d'avancées pour former des logements, des profils, des vide-poches ou similaires, **caractérisé en ce qu'**au moins une partie des parois (20, 26, 32, 36, 38) limitant ces renfoncements est formée par. moulage sous pression, que le corps creux est muni d'au moins une partie des pièces fonctionnelles nécessaires dans la zone de la porte avant l'apposition sur la porte, que la face, sur celle-ci, opposée à l'habitacle du véhicule, est dotée d'évidements (42, 44, 46) de type rainures pour accueillir des lignes électriques et autres, qui sont connectées sur une extrémité respectivement à au moins un élément fonctionnel disposé sur le panneau de garniture et sur l'autre extrémité à une pièce de couplage, apposée sur la garniture pour porte de véhicule de telle manière qu'elle adopte une position définie et que l'unité de montage résultante se composant des corps creux et des pièces fonctionnelles ainsi qu'éventuellement d'autres éléments soit disposée dans sa totalité sur la porte.

2. Panneau de garniture pour porte de véhicule selon la revendication 1, **caractérisé en ce que** les sections finales, opposées à l'élément fonctionnel respectif, d'au moins deux lignes sont rassemblées en un écheveau de lignes et que les extrémités libres d'au moins une partie de ces lignes sont reliées à une pièce de couplage commune.

3. Panneau de garniture pour porte de véhicule selon la revendication 1 ou 2, **caractérisé en ce que** la pièce de couplage disposée sur le panneau de garniture pour porte de véhicule s'enfiche dans une pièce de couplage complémentaire disposée sur la porte lors du montage du panneau de garniture sur la porte de véhicule.

4. Panneau de garniture pour porte de véhicule selon la revendication 2, **caractérisé en ce qu'**il est doté sur la face opposée à l'habitacle d'au moins un logement (48) pour une pièce de couplage pour au moins une ligne électrique.

5. Panneau de garniture pour porte de véhicule selon la revendication 1, **caractérisé en ce qu'**il est muni de pièces de mise en place qui sont conçues sous la forme de pièces fonctionnelles et/ou servent à fixer des pièces fonctionnelles et/ou à fixer la garniture sur la porte de véhicule.

6. Panneau de garniture pour porte de véhicule selon la revendication 1, **caractérisé en ce qu'**à l'intérieur de celui-ci est disposé un canal de conduite d'air (50, 52), qui va du cadre partant de la limite avant de la porte jusqu'à sa limite arrière et constitue une partie d'un système de canaux allant de la partie cadre avant à la partie cadre arrière.

7. Panneau de garniture pour porte de véhicule selon la revendication 1, **caractérisé en ce qu'**au moins une partie de l'espace interne de celui-ci est rempli de mousse.

8. Panneau de garniture pour porte de véhicule selon la revendication 1, **caractérisé en ce que** les parties des parois (32, 36, 38) des renfoncements, formées par moulage sous pression, se situent dans une zone entre les deux parois externes (12, 14), opposées l'une à l'autre, du corps creux.

9. Panneau de garniture pour porte de véhicule selon la revendication 7, **caractérisé en ce que** les parties des parois (32, 36, 38) moulées sous pression se situent à l'intérieur du contour défini par les parties de parois internes (12, 14), formées au moyen du soufflage.

10. Panneau de garniture pour porte de véhicule selon la revendication 1, **caractérisé en ce qu'**il est muni d'éléments décoratifs qui peuvent être apposés ultérieurement.
